(19) Europäisches Patentamt
European Patent Office
Office européen des brevets

(11) **EP 2 091 795 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(21) Anmeldenummer: **07820333.8**

(22) Anmeldetag: **19.09.2007**

(51) Int Cl.:
***B60T 8/17*** (2006.01)    ***B60T 8/1766*** (2006.01)

(86) Internationale Anmeldenummer:
**PCT/EP2007/059889**

(87) Internationale Veröffentlichungsnummer:
**WO 2008/058789 (22.05.2008 Gazette 2008/21)**

(54) **VERFAHREN ZUR BREMSDRUCKREGELUNG IN ZWEIRADFAHRZEUGEN**

METHOD FOR BRAKE PRESSURE REGULATION IN TWO-WHEELED VEHICLES

PROCÉDÉ DE RÉGULATION DE LA PRESSION DE FREINAGE DANS DES VÉHICULES À DEUX ROUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.11.2006 DE 102006054318**

(43) Veröffentlichungstag der Anmeldung:
**26.08.2009 Patentblatt 2009/35**

(73) Patentinhaber: **Robert Bosch GmbH**
**70442 Stuttgart (DE)**

(72) Erfinder: **MOERBE, Matthias**
**74360 Ilsfeld-Helfenberg (DE)**

(56) Entgegenhaltungen:
**EP-A- 0 537 724        WO-A-2006/077211**
**DE-A1-102005 018 484    DE-A1-102005 054 557**

## Beschreibung

Die Erfindung bezieht sich auf ein Verfahren zur Bremsdruckregelung in Zweiradfahrzeugen, bei dem die Bremskraft in einer Bremseinrichtung am Vorderrad in Abhängigkeit von aktuellen Fahrzeugzustandsgrößen eingestellt wird.

Stand der Technik

Es sind ABS-Bremssysteme in Zweirädern bekannt, die beim Bremsen des Fahrzeuges einen Überschlag verhindern sollen. Diese Gefahr besteht insbesondere bei Motorrädern mit hoch liegendem Schwerpunkt und sehr leistungsfähigen Bremsanlagen, da die im Schwerpunkt angreifende Verzögerungskraft zu einem Aufstellmoment um den Radaufstandspunkt am Vorderrad führt. Durch Ermittlung der Raddrehzahlen am Vorderrad und Hinterrad und einem Vergleich der Raddrehzahlen kann die Tendenz zum Abheben des Hinterrades erkannt werden, woraufhin Gegenmaßnahmen zur Verhinderung des Hinterradabhebens eingeleitet werden können. Diese bestehen in einer Reduzierung der Bremskraft am Vorderrad. Zwar wird durch diese Maßnahme verhindert, dass das Hinterrad abhebt, allerdings verlängert sich hierdurch der Bremsweg. Ein Nebeneffekt ist, dass durch das Motorschleppmoment auf welliger Fahrbahn und springendem Hinterrad ebenfalls Bremsdruckreduzierungen ausgelöst werden können.

Die DE 10 2005 018 484 A1 offenbart ein Verfahren zur Detektierung einer Überschlaggefahr eines Motorrads während eines Bremsvorgangs, bei dem ein Abhebewinkel aus dem Verhältnis der Vertikalbeschleunigung zur Längsbeschleunigung ermittelt wird. Ergibt dieses Verhältnis einen Wert, der in einem als kritisch vorgegebenen Wertebereich liegt, so wird davon ausgegangen, dass das Hinterrad des Motors zum Abheben neigt bzw. die Gefahr eines Überschlags nach vorne besteht. In diesem Fall wird der Bremsdruck am Vorderrad durch die Bremselektronik automatisch abgesenkt.

Offenbarung der Erfindung

Von diesem Stand der Technik ausgehend liegt der Erfindung die Aufgabe zugrunde, den Bremsweg von Zweiradfahrzeugen zu reduzieren.

Diese Aufgabe wird erfindungsgemäß mit den Merkmalen des Anspruches 1 gelöst. Die Unteransprüche geben zweckmäßige Weiterbildungen an.

Die Erfindung betrifft ein Verfahren zur Bremsdruckregelung in Zweiradfahrzeugen, bei dem die Bremskraft in einer Bremseinrichtung am Vorderrad in Abhängigkeit von Fahrzustandsgrößen eingestellt wird, dadurch gekennzeichnet,

- dass die aktuelle Verzögerung in Fahrzeuglängsrichtung und in Normalkraftrichtung ermittelt wird, und

- dass der Bremsdruck in der Vorderrad-Bremseinrichtung abhängig von der aktuellen Verzögerung in Fahrzeuglängsrichtung und in Normalkraftrichtung eingestellt wird Durch die Berücksichtigung der Verzögerung in Normalkraftrichtung kann das Bremsverhalten eines Zweirads verbessert werden.

In einer Ausgestaltung des erfindungsgemäßen Verfahrens wird über Beschleunigungssensoren die aktuelle Verzögerung sowohl in Fahrzeuglängsrichtung als auch in der Normalkraftrichtung, also senkrecht zur Fahrzeuglängsrichtung gemessen. Aus den gemessenen Verzögerungswerten können Verzögerungsvektoren gebildet werden, die sich vektoriell zu einem resultierenden Verzögerungsvektor addieren, welcher mit dem Längsverzögerungsvektor einen Winkel einschließt, der im Folgenden Verzögerungs-Aufstellwinkel genannt wird. Der Verzögerungs-Aufstellwinkel wird berechnet, was bei Kenntnis der Verzögerungswerte in Fahrzeuglängsrichtung x und Normalkraftrichtung z aus dem bekannten trigonometrischen Zusammenhang möglich ist, woraufhin in einem Regel- bzw. Steuergerät im Zweiradfahrzeug Stellsignale zur Beaufschlagung der Vorderrad-Bremseinrichtung erzeugt werden und der Bremsdruck in der Vorderradbremseinrichtung in der Weise eingestellt wird, dass der Verzögerungs-Aufstellwinkel einen vorgegebenen Grenzwert nicht übersteigt.

Bei dieser Vorgehensweise wird ein Anheben des Hinterrades bis zum Erreichen eines maximal zulässigen Winkels ausdrücklich zugelassen, wodurch höhere Verzögerungswerte und damit ein kürzerer Bremsweg ermöglicht werden. Ein geringes Anheben des Hinterrades ist auch unter fahrdynamischen Aspekten als unkritisch einzustufen. Aufgrund der Limitierung des Verzögerungs-Aufstellwinkels auf einen maximal zulässigen Wert, der deutlich unterhalb des Wertes liegt, ab dem ein kritischer Fahrzustand mit der Gefahr des Überschlagens eintritt, bestehen ausreichend hohe Sicherheitsreserven zur Vermeidung eines Überschlags.

Das beschriebene Verfahren kann mit verhältnismäßig geringem Zusatzaufwand und mittels am Markt verfügbarer Komponenten ohne größere konstruktive Änderungen am Zweiradfahrzeug realisiert werden und in ABS-Regelsystemen zum Einsatz gelangen.

Die Feststellung, ob das Hinterrad beim Bremsen abgehoben hat, wird zweckmäßigerweise aus der Orientierung des resultierenden Verzögerungsvektors, der sich vektoriell aus den beiden gemessenen Verzögerungen in Längs- und Normalkraftrichtung zusammensetzt, gegenüber dem Längsverzögerungsvektor gewonnen. Im Falle des Abhebens liegt der resultierende Verzögerungsvektor innerhalb des Feldes, welches von den Verzögerungsvektoren in x- und z-Richtung aufgespannt wird. In diesem Fall liefern die Beschleunigungssensoren sowohl in x-Richtung als auch in z-Richtung jeweils einen signifikanten Verzögerungswert. Um sicherzustellen, dass tatsächlich ein Abheben stattgefunden hat und die gemessene Verzögerung in Normalkraftrichtung nicht lediglich auf Fahrbahnunebenheiten zurückzuführen ist, kann zusätzlich der Betrag des resultierenden Verzögerungsvektors als Maßstab herangezogen werden. Ein Abheben liegt demnach nur vor, wenn der Betrag des resultierenden Verzögerungsvektors einen Grenzwert übersteigt; liegt dagegen der Betrag des resultierenden Verzögerungsvektors unterhalb des Grenzwertes, wird nicht von einem Abheben des Hinterrades ausgegangen, vielmehr liegt nur eine Ausgleichsreaktion des Hinterrades als Antwort auf die sprungartige Fahrbahnanregung vor. Das erfindungsgemäße Verfahren mit dem beschriebenen Regelalgorithmus wird vorteilhaft nur durchgeführt, wenn sowohl die Orientierung des resultierenden Verzögerungsvektors als auch der Betrag dieses Vektors in vorgegebenen Feldern bzw. Wertebereichen liegen.

Gemäß vorteilhafter Ausführung ist vorgesehen, dass die Längsverzögerung und die Verzögerung in Normalkraftrichtung ein Koordinatensystem aufspannen, innerhalb dem ein Regelbereich festgelegt wird, in welchem sich die Verzögerungswerte, die von den Beschleunigungssensoren gemessen werden, bewegen dürfen. Dieser Regelbereich korreliert mit einem zulässigen Wertebereich für den Verzögerungs-Aufstellwinkel.

Gemäß einer weiteren vorteilhaften Ausführung werden Fahrbahnunebenheiten, also Störgrößen in Normalkraftrichtung, sowie zweckmäßig auch Störgrößen in Fahrzeuglängsrichtung ermittelt und bei der Durchführung des erfindungsgemäßen Verfahrens ausgefiltert.

Die Fahrbahnunebenheiten wirken sich zunächst am Vorderrad aus, was jedoch bereits beim Überfahren der Unebenheit mit dem Vorderrad in den Beschleunigungssensoren registriert werden kann, auch wenn diese mit einem Längs- und Höhenabstand zum Vorderrad, insbesondere oberhalb des Hinterrades angeordnet sind. Beim Überfahren beispielsweise einer kleinen Erhebung in der Fahrbahn wird das Vorderrad geringfügig angehoben, wodurch sich die Relativlage des gesamten Motorrads gegenüber der Fahrbahn ändert. Diese Änderung in der Relativlage des Motorrads kann über die Beschleunigungssensoren oberhalb des Hinterrads registriert werden, wobei die Anhebung des Vorderrades dazu führt, dass der aus den einzelnen Verzögerungsvektoren in x- und z-Richtung zusammengesetzte resultierende Verzögerungsvektor eine gegenläufige Relativorientierung gegenüber dem Verzögerungsvektor in x-Richtung aufweist als im Falle des Anhebens des Hinterrades. Auf diese Weise kann die Orientierung des resultierenden Verzögerungsvektors gegenüber dem Längs-Verzögerungsvektor zur Identifizierung einer Fahrbahnunebenheit herangezogen werden. Die Ausfilterung derartiger Störgrößen verbessert die Güte des Regelverfahrens.

Die Anordnung an der Beschleunigungssensoren oberhalb des Hinterrades, also mit Längs- und Höhenabstand zum Schwerpunkt des Zweiradfahrzeuges liefert verlässliche Verzögerungswerte in x- und z-Richtung, die für die Durchführung des Verfahrens benötigt werden.

Weitere Vorteile und zweckmäßige Ausführungen sind den weiteren Ansprüchen, der Figurenbeschreibung und den Zeichnungen zu entnehmen. Es zeigen:

Fig. 1    in stark schematisierter Darstellung ein Motorrad mit Beschleunigungssensoren oberhalb des Hinterrades zur Ermittlung der Verzögerung in Längsrichtung und in Normalkraftrichtung,

Fig. 2    das Motorrad mit aufgestelltem Hinterrad, wodurch sich ein resultierender Verzögerungsvektor ergibt, der sich vektoriell aus den Verzögerungsvektoren in x- und z-Richtung zusammensetzt,

Fig. 3    ein vom Längsverzögerungsvektor und dem Verzögerungsvektor in Normalkraftrichtung aufgespanntes Koordinatensystem mit verschiedenen eingetragenen Bereichen im Verzögerungs- und Beschleunigungsfeld, wobei in die Bereiche Teilfelder mit Störgrößen eingetragen sind, einschließlich eines Regelbereiches für die Regelung des Bremsdruckes am Vorderrad im Falle des Abhebens des Hinterrades,

Fig. 4    ein Ablaufschema zur Durchführung des Verfahrens zur Bremsdruckregelung im Falle des Abhebens des Hinterrades.

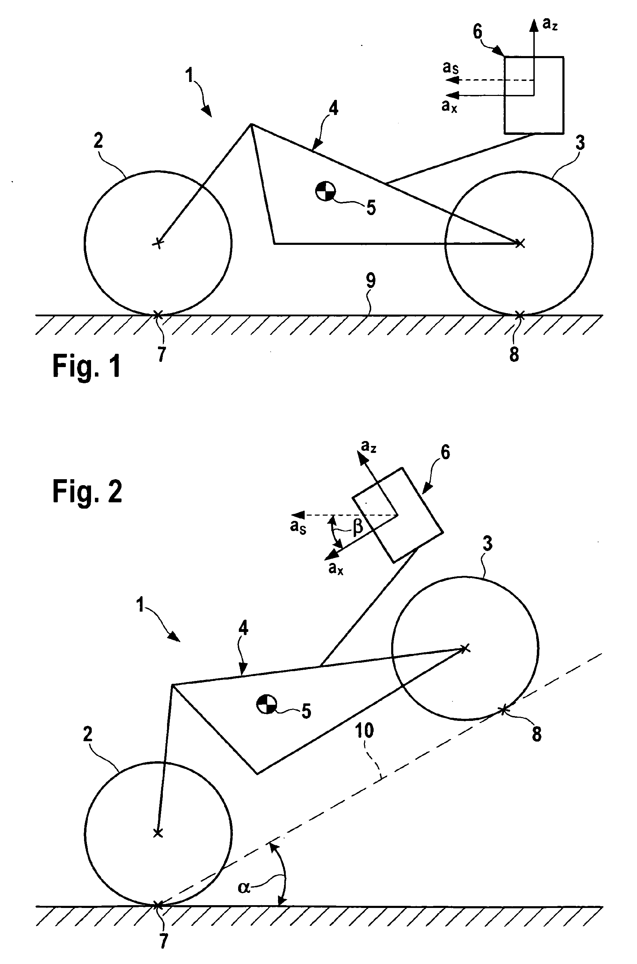

Bei dem in Fig. 1 dargestellten Zweiradfahrzeug 1 handelt es sich insbesondere um ein Motorrad, wobei die Erfindung prinzipiell nicht auf motorgetriebene Zweiradfahrzeuge beschränkt ist. Das Vorderrad 2 mit dem vorderen Radaufstandspunkt 7 zur Fahrbahn 9 und das Hinterrad 3 mit dem hinteren Radaufstandspunkt 8 sind über einen Rahmen 4 miteinander verbunden. Der Schwerpunkt des Zweiradfahrzeuges ist mit dem Bezugszeichen 5 gekennzeichnet. Fest mit dem Rahmen des Zweiradfahrzeuges verbunden sind Beschleunigungssensoren 6, über die eine Beschleunigung bzw. Verzögerung in Fahrzeuglängsrichtung x als auch in Normalkraftrichtung z möglich ist; die Beschleunigungswerte bzw. die daraus gebildeten Beschleunigungsvektoren sind mit $a_x$ und $a_z$ bezeichnet. Die Position der Beschleunigungssensoren 6 im Zweiradfahrzeug ist unmittelbar oberhalb des Hinterrades und somit mit vertikalem und horizontalem Abstand zum Schwerpunkt 5.

Sofern keine Fahrbahnunebenheiten vorhanden sind und die Fahrbahn 9 eben verläuft, wirken im Fahrbetrieb lediglich Beschleunigungs- und Verzögerungskräfte in Fahrzeuglängsrichtung x auf das Zweiradfahrzeug 1. Im Falle von Fahrbahnunebenheiten bewirken diese zusätzliche Beschleunigungs- und Verzögerungswerte in Normalkraftrichtung z.

Aus den gemessenen Verzögerungswerten in x- und z-Richtung lassen sich entsprechende Verzögerungsvektoren bilden, nämlich ein Längsverzögerungsvektor $a_x$ und ein Verzögerungsvektor in Normalkraftrichtung $a_z$. Diese Verzögerungsvektoren $a_x$, $a_z$ können vektoriell zu einem resultierenden Verzögerungsvektor $a_s$ addiert werden. Der resultierende Verzögerungsvektor $a_s$ fällt mit dem Längsverzögerungsvektor $a_x$ zusammen, falls die relative Winkellage des Zweirades 1 gegenüber der Fahrbahn 9 unverändert bleibt. Lediglich Fahrbahnunebenheiten können zu geringen Verzögerungswerten in Normalkraftrichtung führen.

In Fig. 2 ist das Zweiradfahrzeug 1 mit angehobenem Hinterrad 3 dargestellt, so dass nur mit dem Vorderrad 2 über den vorderen Radaufstandspunkt 7 ein Kontakt zur Fahrbahn 9 besteht, wohingegen der hintere, virtuelle Radaufstandspunkt 8 sich in der Luft befindet. Der geometrische Aufstellwinkel ist mit α bezeichnet, dieser Winkel α definiert den Winkel zwischen der Fahrbahn 9 und einer Verbindungslinie 10 durch den vorderen Radaufstandspunkt 7 und der Tangente am Hinterrad 3 durch den virtuellen hinteren Radaufstandspunkt 8.

Der geometrische Aufstellwinkel α korreliert mit einem Verzögerungs-Aufstellwinkel β, der den Winkel zwischen dem resultierenden Verzögerungsvektor $a_s$ und dem Längsverzögerungsvektor $a_x$ bezeichnet. Der Winkel β lässt sich bei Kenntnis der Verzögerungswerte für $a_x$ und $a_z$ aus dem Zusammenhang

$$\beta = \arctan \frac{a_z}{a_x}$$

ermitteln. Der Winkel β hängt zwar mit dem geometrischen Winkel α zusammen, jedoch sind die beiden Winkel in der Regel nicht identisch, da der Verzögerungs-Aufstellwinkel β kein reiner Geometriewinkel ist, sonder vielmehr auch den durch die Verzögerung ausgelösten Relativänderungen in der Geometrie des Zweirades Rechnung trägt, insbesondere dem Eintauchen des Vorderrad-Feder-Dämpfersystems sowie den Feder- und Dämpfungseigenschaften der Reifen.

Bei Kenntnis des Verzögerungs-Aufstellwinkels β kann ein Algorithmus zur Bremsdruckregelung in der Vorderrad-Bremseinrichtung durchgeführt werden, und zwar mit dem Ziel, den Bremsdruck in der Vorderradbremseinrichtung auf einen maximal zulässigen Wert zu erhöhen, um hierdurch eine bestmögliche Verkürzung des Bremsweges zu erreichen. Die Regelung auf einen zulässigen Maximalwert für den Verzögerungs-Aufstellwinkel β ist notwendig, um einen Überschlag des Zweiradfahrzeuges zu verhindern.

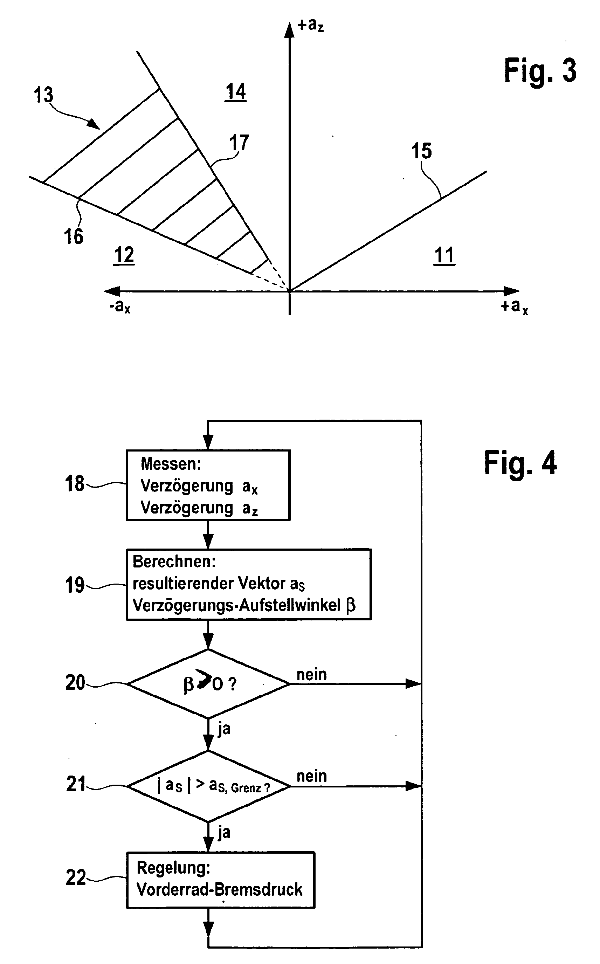

In Fig. 3 ist ein Koordinatensystem dargestellt, das von den Längsverzögerungs- bzw. Beschleunigungsvektoren $a_x$ in Fahrzeuglängsrichtung und dem entsprechenden Beschleunigungs- bzw. Verzögerungsvektor $a_z$ in Normalkraftrichtung aufgespannt wird. Positive Werte für $a_x$ und $a_z$ kennzeichnen Beschleunigungen, negative Werte stellen Verzögerungen dar. Mit den Bezugszeichen 11 und 12 sind Störgrößenbereiche bezeichnet, die sich durch verhältnismäßig niedrige Beschleunigungswerte $a_z$ auszeichnen und unterhalb von Grenzlinien 15 bzw. 16 liegen. Der Störgrößenbereich 11 befindet sich zwischen der Achse positiver Längsbeschleunigungswerte und der zugeordneten Grenzlinie 15 im Feld ebenfalls positiver Beschleunigungen in Normalkraftrichtung z. Der Störgrößenbereich 12 liegt im Feld zwischen der Achse der Längsverzögerung und der Achse positiver Beschleunigung in Normalkraftrichtung.

In dem letztgenannten Feld ist auch ein Regelbereich 13 eingetragen, der durch Grenzlinien 16 und 17 beschränkt ist und dreieckförmig in Richtung auf den Koordinatenursprung verläuft. Zwischen der oberen Grenzlinie 17 des Regelbereiches 13 und der Achse positiver Beschleunigungen $a_z$ in Normalkraftrichtung befindet sich ein Grenzbereich 14, dem unzulässig hohe Verzögerungswerte zugeordnet sind, bei denen die Gefahr eines Überschlages droht. Der Regelbereich 13 zwischen den Grenzlinien 16 und 17 kennzeichnet dagegen den zulässigen Verzögerungsbereich, in welchem der Verzögerungs-Aufstellwinkel β innerhalb eines Wertebereiches $\beta_{Feld}$ liegt, wobei dieser Wertebereich von einem maximalen, vorgegebenen Grenzwert $\beta_{Grenz}$ begrenzt ist. Der Wertebereich $\beta_{Feld}$ für den Verzögerungs-Aufstellwinkel β korreliert mit dem Regelbereich 13 für die Verzögerungswerte bzw. Beschleunigungswerte $a_x$ und $a_z$.

In dem Abschnitt des Regelbereiches 13 unmittelbar benachbart zum Koordinatenursprung ist der Regelbereich mit strichlierter Linie eingetragen, wodurch zum Ausdruck gebracht werden soll, dass in diesem Abschnitt in erster Linie Fahrbahnunebenheiten als Störgrößen zum Tragen kommen, die jedoch noch nicht zu einer Regelung des Vorderrad-Bremsdruckes in dem erfindungsgemäßen Sinne führen sollen. Derartige Störgrößen werden ausgefiltert, um die Güte des Verfahrens zu verbessern und ein Anheben des Hinterrades eindeutig detektieren zu können. Zur Identifizierung dieses ursprungsnahen Bereiches wird der Betrag des resultierenden Verzögerungsvektors $a_S$ betrachtet und gemäß dem Zusammenhang

$$|a_S| > a_{S,Grenz}$$

überprüft, ob der Betrag einen zugeordneten Grenzwert $a_{S,Grenz}$ übersteigt. Nur wenn dies der Fall ist, kann mit hinreichender Sicherheit von einem Abheben des Hinterrades ausgegangen werden und greift das erfindungsgemäße Regelverfahren zur Beeinflussung des Bremsdruckes an der Vorderradbremseinrichtung.

In Fig. 4 ist zusammenfassend der Verfahrensablauf zur Durchführung des Regelverfahrens dargestellt. In einem ersten Verfahrensschritt 18 werden zunächst die Verzögerungen $a_x$ und $a_z$ in Fahrzeuglängsrichtung und in Normalkraftrichtung gemessen. Im folgenden Verfahrensschritt 19 werden die gemessenen Verzögerungswerte verarbeitet und durch vektorielles Zusammensetzen des Längsverzögerungsvektors und des Verzögerungsvektors in Normalkraftrichtung ein resultierender Vektor $a_s$ berechnet. Außerdem wird der Verzögerungs-Aufstellwinkel aus dem trigonometrischen Zusammenhang zwischen dem Längsverzögerungsvektor $a_x$ und dem Verzögerungsvektor $a_z$ in Normalkraftrichtung ermittelt.

Im nächsten Verfahrensschritt 20 erfolgt die Abfrage, ob der Verzögerungs-Aufstellwinkel $\beta$ größer als Null ist. Durch diese Abfrage wird festgestellt, ob das Hinterrad tatsächlich von der Fahrbahn abgehoben ist. Ist der Wert für den Winkel dagegen kleiner als Null, so ist das Hinterrad eingetaucht, beispielsweise beim Überfahren einer Mulde oder einer sonstigen Fahrbahnunebenheit. Ergibt die Abfrage nach Verfahrensschritt 20, dass der Winkel $\beta$ nicht größer als Null ist, wird der nein-Verzweigung entsprechend wieder zum ersten Verfahrensschritt 18 zurückgekehrt, es erfolgt in zyklischen Abständen ein erneutes Durchlaufen des gesamten Verfahrensablaufes.

Für den Fall, dass festgestellt wird, dass der Verzögerungs-Aufstellwinkel größer als Null ist, wird der ja-Verzweigung folgend zum nächsten Verfahrensschritt 21 fortgeschritten. In diesem Verfahrensschritt 21 erfolgt eine Abfrage, ob der Betrag des resultierenden Vektors $a_s$ größer ist als ein zugeordneter Grenzwert $a_{S,Grenz}$. Mit dieser Abfrage wird sichergestellt, dass nicht nur eine kleine Erhebung in der Fahrbahn oder sonstige Fahrbahnunebenheit zu einer geringfügigen, beschleunigten Bewegung des Hinterrades nach oben mit minimalem Abheben führt, sondern dass vielmehr eine zu regelnde Fahrsituation mit deutlich abgehobenem Hinterrad vorliegt. Falls die Bedingung in Verfahrensschritt 21 nicht erfüllt ist, wird der nein-Verzweigung folgend wieder zum ersten Verfahrensschritt 18 zurückgekehrt. Andernfalls wird gemäß der ja-Verzweigung zum nächsten Verfahrensschritt 22 fortgefahren, gemäß dem der Vorderrad-Bremsdruck auf einen zulässigen Wert geregelt wird. Bei der Regelung wird sichergestellt, dass der Verzögerungs-Aufstellwinkel $\beta$ einen noch zulässigen Grenzwert nicht übersteigt. Nach Beendigung der Bremsdruckregelung wird wieder zum ersten Verfahrensschritt zurückgekehrt.

**Patentansprüche**

1.  Verfahren zur Bremsdruckregelung in Zweiradfahrzeugen, bei dem die Bremskraft in einer Bremseinrichtung am Vorderrad in Abhängigkeit von Fahrzustandsgrößen eingestellt wird, wobei die aktuelle Verzögerung ($a_x$, $a_z$) in Fahrzeuglängsrichtung (x) und in Normalkraftrichtung (z) ermittelt wird, die Verzögerungsvektoren der gemessenen Verzögerungen ($a_x$, $a_z$) vektoriell zu einem resultierenden Verzögerungsvektor ($a_s$) addiert werden, der Winkel ($\beta$) zwischen dem resultierenden Verzögerungsvektor ($a_s$) und dem Längsverzögerungsvektor ($a_x$) bestimmt und der Bremsdruck in der Vorderrad-Bremseinrichtung in der Weise eingestellt wird, dass der Winkel ($\beta$) einen vorgegebenen Grenzwert ($\beta_{Grenz}$) nicht übersteigt,
    **dadurch gekennzeichnet, dass** der Winkel ($\square$) auf einen vorgegebenen Wertebereich ($\square_{Feld}$) eingeregelt wird, und dass ein Abheben des Hinterrades (3) nur für den Fall vorliegt und demzufolge der Vorderrad-Bremsdruck modifiziert wird, dass der Betrag des resultierenden Verzögerungsvektors ($a_s$) einen Grenzwert ($a_{S,Grenz}$) übersteigt:

$$\left| a_S \right| > a_{S,Grenz} \; .$$

2.  Verfahren nach Anspruch 1,
    **dadurch gekennzeichnet, dass** über Beschleunigungssensoren (6) die aktuelle Verzögerung ($a_x$, $a_z$) in Fahrzeuglängsrichtung (x) und in Normalkraftrichtung (z) gemessen wird.

3.  Verfahren nach Anspruch 1 oder 2,
    **dadurch gekennzeichnet, dass** das Abheben des Hinterrades (3) aus der Orientierung des resultierenden Verzögerungsvektors ($a_s$) gegenüber dem Längs-Verzögerungsvektor ($a_x$) bestimmt wird.

4.  Verfahren nach einem der Ansprüche 1 bis 3,
    **dadurch gekennzeichnet, dass** in einem von der Längsverzögerung ($a_x$) und der Verzögerung ($a_z$) in Normalkraftrichtung (z) aufgespannten Koordinatensystem ein Regelbereich ($C_{Feld}$) festgelegt wird, mit dem der einzuregelnde Wertebereich ($\beta_{Feld}$) für den Winkel ($\beta$) korreliert.

5.  Verfahren nach einem der Ansprüche 1 bis 4,
    **dadurch gekennzeichnet, dass** die Verzögerungen ($a_x$, $a_z$) mit Abstand zum Schwerpunkt gemessen werden.

6.  Verfahren nach Anspruch 5,
    **dadurch gekennzeichnet, dass** die Verzögerung ($a_x$) in Längsrichtung (x) des Zweiradfahrzeugs (1) gesehen in Höhe des Hinterrades (3) gemessen wird.

7.  Verfahren nach einem der Ansprüche 1 bis 6,
    **dadurch gekennzeichnet, dass** Fahrbahnunebenheiten als Störgrößen in Normalkraftrichtung (z) ermittelt und ausgefiltert werden.

8.  Verfahren nach Anspruch 7,

**dadurch gekennzeichnet, dass** Fahrbahnunebenheiten am Vorderrad (2) als Verzögerung ($a_z$) in Normalkraftrichtung (z) über den Beschleunigungssensor gemessen und unter Berücksichtigung der Fahrzeuggeschwindigkeit und der Fahrzeuggeometrie als Störgrößen am Hinterrad (3) ausgefiltert werden.

9. Verfahren nach Anspruch 8,
**dadurch gekennzeichnet, dass** die Orientierung des resultierenden Verzögerungsvektors ($a_s$) gegenüber dem Längs-Verzögerungsvektor ($a_x$) zur Identifizierung einer Fahrbahnunebenheit dient.

10. Verfahren nach einem der Ansprüche 1 bis 9,
**dadurch gekennzeichnet, dass** Störgrößen in Fahrzeuglängsrichtung ermittelt und ausgefiltert werden.

11. Regel- bzw. Steuergerät das zur Durchführung des Verfahrens nach einem der Ansprüche 1 bis 10, ausgestaltet ist.

## Claims

1. Method for brake pressure control in two-wheeled vehicles, in which the braking force in a brake device on the front wheel is set as a function of driving state variables, wherein the current deceleration ($a_x$, $a_z$) is determined in the longitudinal direction (x) of the vehicle and in the normal force direction (z), the deceleration vectors of the measured decelerations ($a_x$, $a_z$) being added vectorially to form a resulting deceleration vector ($a_s$), the angle ($\beta$) between the resulting deceleration vector ($a_s$) and the longitudinal deceleration vector ($a_x$) being determined, and the brake pressure in the front wheel brake device being set in such a way that the angle ($\beta$) does not exceed a predefined limiting value ($\beta_{limit}$), **characterized in that** the angle ($\beta$) is set to a predefined value range ($\beta_{field}$), and **in that** the rear wheel (3) lifts off, and the front wheel brake pressure is accordingly modified, only in the event of the value of the resulting deceleration vector ($a_s$) exceeding a limiting value ($a_{s,limit}$) :

$$|a_s| > a_{s,limit}.$$

2. Method according to Claim 1,
**characterized in that** the current deceleration ($a_x$, $a_z$) in the longitudinal direction (x) of the vehicle and in the normal force direction (z) is measured by means of acceleration sensors (6).

3. Method according to Claim 1 or 2,
**characterized in that** the lifting off of the rear wheel (3) is determined from the orientation of the resulting deceleration vector ($a_s$) with respect to the longitudinal deceleration vector ($a_x$).

4. Method according to one of Claims 1 to 3,
**characterized in that**, in a coordinate system which is made to extend from the longitudinal deceleration ($a_x$) and the deceleration ($a_z$) in the normal force direction (z), a control range ($C_{field}$) is defined with which the value range ($\beta_{field}$) which is to be set for the angle ($\beta$) correlates.

5. Method according to one of Claims 1 to 4,
**characterized in that** the decelerations ($a_x$, $a_z$) are measured at a distance from the centre of gravity.

6. Method according to Claim 5,
**characterized in that** the deceleration ($a_x$) is measured at the level of the rear wheel (3) viewed in the longitudinal direction (x) of the two-wheeled vehicle (1).

7. Method according to one of Claims 1 to 6,
**characterized in that** the unevennesses in the carriageway are determined as interference variables in the normal force direction (z) and filtered out.

8. Method according to Claim 7,
**characterized in that** unevennesses in the carriageway at the front wheel (2) are measured as a deceleration ($a_z$) in the normal force direction (z) by means of the acceleration sensor and are filtered out as interference variables at the rear wheel (3) by taking into account the speed of the vehicle and the geometry of the vehicle.

9. Method according to Claim 8,
**characterized in that** the orientation of the resulting deceleration vector ($a_s$) with respect to the longitudinal deceleration vector ($a_x$) serves to identify an unevenness in the carriageway.

10. Method according to one of Claims 1 to 9,
**characterized in that** interference variables in the longitudinal direction of the vehicle are determined and filtered out.

11. Closed-loop or open-loop control device which is configured to carry out the method according to one of Claims 1 to 10.

## Revendications

1. Procédé de la régulation de la pression de freinage sur des véhicules à deux roues, dans lequel la force de freinage dans un dispositif de freinage prévu sur la roue avant est ajustée en fonction de grandeurs d'état de roulage,

le ralentissement effectif ($a_x$, $a_z$) est déterminé dans le sens de la longueur (x) du véhicule et dans la direction (z) des forces normales,

les vecteurs de ralentissement des ralentissements ($a_x$, $a_z$) mesurés sont additionnés vectoriellement en un vecteur résultant de ralentissement ($a_s$), l'angle ($\beta$) entre le vecteur résultant de ralentissement ($a_s$) et le vecteur ($a_x$) de ralentissement longitudinal sont déterminés et

la pression de freinage sur le dispositif de freinage de la roue avant est ajustée de telle sorte que l'angle ($\beta$) ne dépasse pas une valeur limite ($\beta_{limite}$) prédéterminée,

**caractérisé en ce que**

l'angle ($\beta$) est ajusté dans une plage prédéterminée de valeurs ($\beta_{champ}$),

**en ce que** un relèvement de la roue arrière (3) survient uniquement lorsque que la valeur du vecteur résultant du ralentissement ($a_s$) dépasse une valeur limite ($a_{s,limite}$) :

$$|a_s| > a_{s,limite}$$

et

**en ce que** la pression de freinage sur la roue avant est alors modifiée en conséquence.

2. Procédé selon la revendication 1, **caractérisé en ce que** le ralentissement effectif ($a_x$, $a_z$) dans le sens de la longueur (x) du véhicule et dans la direction (z) des forces normales est mesuré par l'intermédiaire de sondes d'accélération (6).

3. Procédé selon les revendications 1 ou 2, **caractérisé en ce que** le relèvement de la roue arrière (3) est déterminé à partir de l'orientation du vecteur résultant de ralentissement ($a_s$) par rapport au vecteur ($a_x$) de ralentissement longitudinal.

4. Procédé selon l'une des revendications 1 à 3, **caractérisé en ce qu'**une plage de régulation ($C_{champ}$) à laquelle la plage de valeurs ($\beta_{champ}$) à réguler pour l'angle ($\beta$) est corrélée est définie dans un système de coordonnées sous-tendu par le ralentissement longitudinal ($a_x$) et le ralentissement ($a_z$) dans la direction (z) des forces normales.

5. Procédé selon l'une des revendications 1 à 4, **caractérisé en ce que** les ralentissements ($a_x$, $a_z$) sont mesurés à distance du centre de masse.

6. Procédé selon la revendication 5, **caractérisé en ce que** le ralentissement ($a_x$) dans le sens (x) de la longueur du véhicule (1) à deux roues est mesuré à la hauteur de la roue arrière (3).

7. Procédé selon l'une des revendications 1 à 6, **caractérisé en ce que** les irrégularités de la chaussée sont déterminées et extraites par filtrage en tant que grandeurs perturbatrices dans la direction (z) des forces normales.

8. Procédé selon la revendication 7, **caractérisé en ce que** les irrégularités de la chaussée sont mesurées sur la roue avant (2) en tant que ralentissement ($a_z$) dans la direction (z) des forces normales par l'intermédiaire de la sonde d'accélération et sont extraites en tant que grandeurs perturbatrices agissant sur la roue arrière (3) par un filtrage tenant compte de la vitesse du véhicule et de la géométrie du véhicule.

9. Procédé selon la revendication 8, **caractérisé en ce que** l'orientation du vecteur résultant de ralentissement ($a_s$) par rapport au vecteur ($a_x$) de ralentissement longitudinal sert à identifier une irrégularité de la chaussée.

10. Procédé selon l'une des revendications 1 à 9, **caractérisé en ce que** les grandeurs perturbatrices dans le sens de la longueur du véhicule sont déterminées et séparées par filtrage.

11. Appareil de régulation et de commande configuré pour exécuter le procédé selon l'une des revendications 1 à 10.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005018484 A1